# EUROPÄISCHE PATENTANMELDUNG

(11) **EP 4 541 454 A1**
(43) Veröffentlichungstag der Anmeldung: **23.04.2025**
(21) Anmeldenummer: 23204773.8
(22) Anmeldetag: 20.10.2023
(51) Int. Cl.: B01J 4/00, B01J 6/00, B01J 8/00, B01J 8/02, B01J 19/00, B01J 19/24, B01J 19/02

(54) **OXIDATIONSREAKTOR ZUR PARTIALOXIDATION EINES EINSATZSTROMS MIT SPEZIELLER GEOMETRIE**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Coscia, Antonio, 60439 Frankfurt am Main (DE)
(74) Vertreter: Air Liquide

(57) **Zusammenfassung**

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage. Erfindungsgemäß wird der Einlassbereich des Oxidationsreaktors als Kombination eines kuppelförmigen Bereichs mit einem kegel(stumpf)förmigen Bereich ausgestaltet, wobei der kegel(stumpf)förmige Einlassbereich in den zylindrischen Anschnitt des Oxidationsreaktors übergeht.

## Beschreibung

### Gebiet der Erfindung

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage.

Die Erfindung betrifft weiterhin ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation oder mittels autothermem Reformieren sowie ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom. Die Erfindung betrifft ferner entsprechende Verwendungen des vorgeschlagenen Oxidationsreaktors.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese. Klassische Wege zur Herstellung wasserstoffhaltiger Synthesegase umfassen die Dampfreformierung, das autotherme Reformieren (ATR) und die nichtkatalytische Partialoxidation (POX), wobei jeweils kohlenwasserstoffhaltige Einsatzmaterialien als Eduktströme verwendet werden. ATR und POX werden dabei in konstruktiv ähnlichen Oxidationsreaktoren durchgeführt, die sich im Wesentlichen durch das Vorhandensein einer Katalysatorschicht im unteren Teil des Oxidationsreaktors beim Autothermreformer unterscheiden.

Typischerweise wird die partielle Oxidation von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Oxidationsreaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel, bevorzugt an deren Pol angebracht und dient zum Einleiten des kohlenwasserstoffhaltigem Einsatzmaterials, des Sauerstoff enthaltenden Oxidationsmittels sowie - optional - eines oder mehrerer Moderatorströme.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, mit Sauerstoff angereicherte Luft oder reiner Sauerstoff mit mindestens 95 mol% Sauerstoff eingesetzt. Ein kohlenwasserstoffhaltiger Einsatzstrom ist in einem Beispiel ein Strom, der Kohlenwasserstoffe wie Methan oder höhere Kohlenwasserstoffe oder andere wasserstoff- und kohlenstoffhaltige Moleküle enthält, beispielsweise Alkohole wie Methanol oder Ethanol. Dies kann auch ein Strom sein, der von einem vorgeschalteten Primärreformer erhalten wird und neben Kohlenmonoxid (CO), Wasserstoff (H₂), Kohlendioxid (CO₂) und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Der grundsätzliche Aufbau und die Verwendung von Oxidationsreaktoren der beschriebenen Art sind aus dem Schrifttum an sich bekannt und werden beispielsweise in dem Artikel "Gas Production", Ullmann's Encyclopedia of Industrial Chemistry, Sixth Edition, 1998 Electronic Release, beschreibt in Kapitel 2.5 "Autothermal Catalytic Reforming" bzw. Kapitel 3. "Noncatalytic Partial Oxidation" beschrieben. Beide Reaktortypen weisen einen drucktragenden Reaktormantel aus einem in der Regel metallischen Werkstoff auf, der auf seiner Innenseite mit einer oder mehreren Schichten feuerfesten Materials, beispielsweise feuerfester Steine, ausgekleidet ist, die somit Schutzschichten gegen die im Reaktorinneren freigesetzte Wärme und gegebenenfalls gegen korrosive Gasbestandteile bilden.

Als Ausgangsstrom zur Erzeugung eines wasserstoffhaltigen Gases wird im neueren Schrifttum auch ein Ammoniak enthaltender Einsatzstrom vorgeschlagen, der mit einem Sauerstoff enthaltenden Oxidationsmittelstrom und optional einem Dampfstrom zu einem Wasserstoff enthaltenden Produktgas umgesetzt wird. Die Umsetzung kann dabei beispielsweise wiederum nach dem Prinzip der nichtkatalytischen Partialoxidation oder nach dem Prinzip des autothermen Reformierens in jeweils geeigneten Oxidationsreaktoren erfolgen.

Die aus dem Stand der Technik bekannten Oxidationsreaktoren, insbesondere POX-Reaktoren oder Autothermreformer, haben oft einen Einlassbereich, der als Kegel oder Kegelstumpf einerseits oder als Kuppel andererseits ausgestaltet ist.

Dabei weisen beide Bauformen jeweils spezifische Vorteile und Nachteile auf:
- Der Übergang von einem kleinen auf einen großen Durchmesser kann bei einem kuppelförmigen Einlassbereich gegenüber einem kegel(stumpf)förmigen Einlassbereich auf einer deutlich kürzeren Länge realisiert werden, was - bei konstanter Höhe und gleichem Durchmesser des Reaktors - Oxidationsreaktoren mit einem längeren zylindrischen Mantelabschnitt ermöglicht. Hierdurch kommt es zu einer verbesserten Vermischung der Produktgase in axialer Richtung und es Bestehen mehr Möglichkeiten für die Anordnung eines ATR-Katalysators.
- Ein kuppelförmiger Einlassbereich bietet mehr Flexibilität bei der Konstruktion, da bei verändertem Reaktor- und Brennerdurchmesser die Kuppel in größerem Umfang hinsichtlich ihrer Geometrie angepasst werden kann, während ein kegel(stumpf)förmiger Einlassbereich hierbei weniger Freiheitsgrade bietet, da aus strukturellen bzw. statischen Gründen von einem Extremwert für den Winkel von etwa 30° nicht abgewichen werden kann.
- Ein kegel(stumpf)förmiger Einlassbereich sorgt für einen größeren Abstand zwischen der Brennerflamme und den Innenwänden des Oxidationsreaktors, was die thermische und mechanische Belastung und den Verschleiß der feuerfesten Schutzschicht verringert und die Flammengeometrie weniger beeinträchtigt, da Rezirkulationszonen und Turbulenzen vermieden werden, die entstehen, wenn Strahlströme in der Nähe einer Innenwand des Oxidationsreaktors fließen.
- Der Nachteil eines kuppelförmigen Einlassbereichs ist sein begrenzter Durchmesser, da mit zunehmendem Reaktordurchmesser die Aufnahme der durch thermische Ausdehnung bedingten mechanischen Spannungen innerhalb der feuerfesten Schutzschicht des Einlassbereichs komplexer wird und die daraus resultierende, vergleichsweise große Bewegung aufgrund der thermischen Ausdehnung zusammen mit den zunehmenden mechanischen Belastungen und Kräften auf die feuerfeste Schutzschicht sich nachteilig auf die Integrität und Lebensdauer der feuerfesten Ausstattung auswirkt.

### Beschreibung der Erfindung

Die Aufgabe der vorliegenden Erfindung besteht daher darin, einen Oxidationsreaktor zur Partialoxidation eines Einsatzstroms mit einem Sauerstoff enthaltenden Oxidationsmittelstrom zu einem Wasserstoff enthaltenden Produktstrom anzugeben, der die erwähnten Nachteile der aus dem Stand der Technik bekannten Oxidationsreaktoren nicht aufweist, wobei spezifische Vorteile der verschiedenen Bauformen möglichst beibehalten werden sollen.

Diese Aufgabe wird in einem ersten Aspekt der Erfindung durch einen Oxidationsreaktor mit den Merkmalen des Anspruchs 1 gelöst.

In weiteren Aspekten wird die Aufgabe gelöst durch Verwendungen des Oxidationsreaktors mit den Merkmalen der Ansprüche 11 bis 14.

In weiteren Aspekten wird die Aufgabe gelöst durch ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation gemäß Anspruch 15 oder mittels autothermem Reformieren gemäß Anspruch 16 sowie durch ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom gemäß Anspruch 17 oder mittels autothermem Reformieren gemäß Anspruch 18.

In weiteren Aspekten wird die Aufgabe gelöst durch weitere Ausgestaltungen der Erfindung, die sich aus den Unteransprüchen der jeweiligen Kategorie ergeben.

Unter einem sauerstoffhaltigen Oxidationsmittel ist jedes sauerstoffhaltige Fluid zu verstehen, wie z. B. reiner Sauerstoff mit beliebigem Reinheitsgrad, Luft oder jedes andere Fluid, das in der Lage ist, einem Reaktanten Sauerstoff zuzuführen.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ausleiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist Dampf als Synonym für Wasserdampf zu verstehen, sofern nicht im Einzelfall etwas anderes angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Unter einer Fluidverbindung zwischen zwei Bereichen der erfindungsgemäßen Vorrichtung oder Anlage ist jede Art von Verbindung zu verstehen, die es ermöglicht, dass ein Fluid, z. B. ein Gasstrom, von dem einen in den anderen der beiden Bereiche strömen kann, wobei zwischengeschaltete Bereiche oder Bauteile vernachlässigt werden. Unter einer direkten Fluidverbindung ist insbesondere jede Art von Verbindung zu verstehen, die es ermöglicht, dass ein Fluid, z. B. ein Gasstrom, direkt von dem einen in den anderen der beiden Bereiche strömt, wobei keine weiteren Bereiche oder Komponenten zwischengeschaltet sind, mit Ausnahme von reinen Transportvorgängen und den dafür erforderlichen Mitteln, z. B. Rohrleitungen, Ventile, Pumpen, Kompressoren, Speicher. Ein Beispiel wäre eine Rohrleitung, die direkt von dem einen in den anderen der beiden Bereiche führt.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Die Bedingungen der nichtkatalytischen Partialoxidation und des autothermen Reformierens sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondere ist es kennzeichnend für die nichtkatalytische Partialoxidation, dass kein Katalysator indem Partialoxidationsreaktor vorhanden ist. Im Gegensatz hierzu ist es ein Kennzeichen des autothermen Reformierens, dass im unteren Teil des Oxidationsreaktors eine Schicht eines speziellen, aber an sich bekannten und im Handel erhältlichen ATR-Katalysators vorhanden ist.

Notwendige Anpassungen der Bedingungen der nichtkatalytischen Partialoxidation und des autothermen Reformierens an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Die Begriffe Eingang, Einlass, Ausgang, Auslass beziehen sich auf die Strömungsrichtung der Einsatzstoffe durch den Oxidationsreaktor.

Der Erfindung liegt die Erkenntnis zugrunde, dass die Nachteile der bislang aus dem Stand der Technik bekannten Oxidationsreaktoren vermieden werden können, wenn der Einlassbereich des Oxidationsreaktors als Kombination eines kuppelförmigen, bevorzugt die Oberfläche eines Kugelsegments aufweisenden ersten Abschnitts mit einem kegel(stumpf)förmigen zweiten Abschnitt ausgestaltet wird, wobei der kegel(stumpf)förmige zweiten Abschnitt in einen zylindrischen dritten Abschnitt des Oxidationsreaktors übergeht. Alle drei Abschnitte sind gasdicht miteinander verbunden und auf ihrer Innenseite mit mindestens einer feuerfesten Schutzschicht versehen. Hierdurch wird es ermöglicht, die Vorteile beider Ausgestaltungen zu kombinieren und gleichzeitig ihre gegebenen Anwendungsgrenzen für großtechnische Anwendungen zu überwinden.

Die kuppelförmige Ausgestaltung des Einlassbereichs wird gesamten Leistungs-/Größenbereich des Oxidationsreaktors konstant gehalten. Die Anordnung des Brenners erfolgt am Pol des kuppelförmigen Einlassbereich.

Der kegel(stumpf)förmige Einlassbereich wird mit definiertem Steigungswinkel ausgestaltet. Bei einem festen Durchmesser-/Höhenverhältnis des Oxidationsreaktors müssen für seine Maßstabsvergrößerung nur die Länge des Kegelstumpfs und der Durchmesser des zylindrischen Abschnitts angepasst werden.

Durch die Kombination eines kuppelförmigen Einlassbereichs mit einem kegel(stumpf)förmigen Einlassbereich kann der Steigungswinkel des Kegels bzw. Kegelstumpfs im Vergleich zu Ausgestaltungen laut Stand der Technik deutlich kleiner gehalten werden, was das Volumen des Reaktors vergrößert und gleichzeitig die Kräfte und Belastungen auf die feuerfeste Schutzschicht minimiert.

### Bevorzugte Ausgestaltungen der Erfindung

Ein zweiter Aspekt der Erfindung ist dadurch gekennzeichnet, dass der erste Abschnitt (a1) halbkugelförmig ausgestaltet ist, also in Längsrichtung des Oxidationsreaktors einen konstanten Radius aufweist, der einem Halbkreis entspricht. Eine solche Geometrie übt die geringsten Lasten und Kräfte auf die innen angeordnete feuerfeste Auskleidung aus.

Ein dritter Aspekt der Erfindung ist dadurch gekennzeichnet, dass der kegelstumpfförmige zweite Abschnitt (a2) einen Steigungswinkel zwischen und umfassend 5 und 30°, bevorzugt zwischen und umfassend 10 und 20° gegenüber der Längsachse aufweist, wobei die genannten Endwerte in die Wertebereiche einbezogen sind. Untersuchungen zeigen, dass durch diese Steigungswinkel des Kegelstumpfs, die kleiner sind als bei Ausgestaltungen von Oxidationsreaktoren laut Stand der Technik, das Volumen des Reaktors vergrößert und gleichzeitig die Kräfte und Belastungen auf die feuerfeste Schutzschicht minimiert werden können.

Ein vierter Aspekt der Erfindung ist dadurch gekennzeichnet, dass der kegelstumpfförmige zweite Abschnitt (a2) an seinem schmalen Ende einen Innendurchmesser D1 und an seinem weiten Ende einen Innendurchmesser D2 aufweist, wobei das Verhältnis D1/D2 zwischen 0,7 und 0,9, bevorzugt zwischen 0,75 und 0,85 liegt. Untersuchungen zeigen, dass diese Längenverhältnisse besondere Vorteile bieten.

Ein fünfter Aspekt der Erfindung ist dadurch gekennzeichnet, dass an einer Übergangsstelle der Abschnitte (a1) und (a2) die Steigung des kuppelförmigen ersten Abschnitts der Steigung des kegelstumpfförmigen zweiten Abschnitts entspricht. Auf diese Weise werden Kanten beim Reaktormantel und der innen angebrachten, feuerfesten Schutzschicht vermieden, was die mechanische Stabilität des Apparats vergrößert und die thermische Beanspruchung an der Verbindungsstelle der Abschnitte (a1) und (a2) minimiert.

Ein sechster Aspekt der Erfindung ist dadurch gekennzeichnet, dass der Reaktormantel von mindestens einer Kühlzone bzw. einem Kühlmantel umgeben ist, mittels der mindestens ein Abschnitt des Reaktormantels mittels eines fluiden Kühlmediums kühlbar ist. Hierdurch verbessert sich die Temperaturkontrolle des Oxidationsreaktors und die verwendeten Konstruktionsmaterialien und Bauteile des Oxidationsreaktors werden weniger thermisch belastet.

Ein siebter Aspekt der Erfindung ist dadurch gekennzeichnet, dass mindestens zwei Kühlzonen vorhanden sind, die entlang der Längsachse des Oxidationsreaktors angeordnet sind. Hierdurch kann der Oxidationsreaktor weiterbetrieben werden, wenn beispielsweise nur eine Revision oder Reparatur an einer bestimmten Stelle des Reaktormantels erforderlich ist. Es wird dabei nur diejenige Kühlzone außer Betrieb genommen, die die betroffene Stelle des Reaktormantels umgibt, und sodann demontiert. Nach erfolgter Revision oder Reparatur wird diese Kühlzone remontiert und wieder in Betrieb gesetzt. Während der gesamten Zeitdauer der Revisions- bzw. Reparaturmaßnahmen kann der Oxidationsreaktor weiter betrieben werden, so dass Produktionsstillstände vermieden werden.

Vorteilhaft ist es ferner, dass durch das erfindungsgemäße Vorhandensein mehrerer Kühlzonen, beispielsweise mehrerer Kühlzonen, die über die Länge des Oxidationsreaktors angeordnet sind, besser auf eine unterschiedliche Wärmeproduktion entlang der Längsachse des Oxidationsreaktors reagiert werden kann. So könnte sich in einer beispielhaften Ausgestaltung des Oxidationsreaktors als ATR der Wärmehaushalt im oberen Brennerteil des Oxidationsreaktors von demjenigen im unteren Reaktorteil unterscheiden, der die ATR-Katalysatorschüttung umfasst. Mit der erfindungsgemäßen Ausgestaltung des Oxidationsreaktors mit mehreren Kühlzonen kann auf solche Unterschiede feiner reagiert werden, so dass sich eine verbesserte Temperaturkontrolle des Oxidationsreaktors ergibt.

Ein achter Aspekt der Erfindung ist dadurch gekennzeichnet, dass die mindestens zwei Kühlzonen von einem gemeinsamen Kühlmedium durchströmt werden, wobei vorzugsweise Wasser als gemeinsames Kühlmedium verwendet wird. Wasser ist an den meisten Standorten in ausreichender Menge und Qualität verfügbar, ist ungiftig und weist Vorteile auf, wenn eine Kühlung in der entsprechenden Kühlzone als Siedekühlung realisiert werden soll. Die Verwendung eines gemeinsamen Kühlmediums vereinfacht zudem die Gestaltung des Kühlmittelkreislaufs.

Ein neunter Aspekt der Erfindung ist dadurch gekennzeichnet, dass die mindestens zwei Kühlzonen separat betreibbar und separat montierbar und demontierbar sind. Hierdurch kann der Oxidationsreaktor in einem Beispiel weiterbetrieben werden, wenn beispielsweise nur eine Revision oder Reparatur an einer bestimmten Stelle des Reaktormantels erforderlich ist. Während der Zeitdauer der Revisions- bzw. Reparaturmaßnahmen kann der Oxidationsreaktor weiter betrieben werden, so dass Produktionsstillstände vermieden werden.

Ein zehnter Aspekt der Erfindung ist dadurch gekennzeichnet, dass ein Teil der Reaktorkammermit einer Schüttung eines festen, partikelförmigen, für das autotherme Reformieren (ATR) aktiven Katalysators gefüllt ist.

Ein elfter Aspekt der Erfindung betrifft die Verwendung eines Oxidationsreaktors nach Anspruch 1 bis 9 für die nichtkatalytische Partialoxidation (POX) eines Kohlenwasserstoffe enthaltenden Einsatzstroms zu einem Wasserstoff und Kohlenoxide enthaltenden Produktstrom.

Ein zwölfter Aspekt der Erfindung betrifft die Verwendung eines Oxidationsreaktors nach Anspruch 10 für das autotherme Reformieren (ATR) eines Kohlenwasserstoffe enthaltenden Einsatzstroms zu einem Wasserstoff und Kohlenoxide enthaltenden Produktstrom.

Ein dreizehnter Aspekt der Erfindung betrifft die Verwendung eines Oxidationsreaktors nach Anspruch 1 bis 9 für die nichtkatalytische Partialoxidation eines Ammoniak enthaltenden Einsatzstroms zu einem Wasserstoff und Stickstoff enthaltenden Produktstrom.

Ein vierzehnter Aspekt der Erfindung betrifft die Verwendung eines Oxidationsreaktors nach Anspruch 10 für das autotherme Reformieren eines Ammoniak enthaltenden Einsatzstroms zu einem Wasserstoff und Stickstoff enthaltenden Produktstrom.

Ein fünfzehnter Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom durch nichtkatalytische Partialoxidation, umfassend folgende Schritte:
(a) Bereitstellen eines Oxidationsreaktors nach Anspruch 1 bis 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammerunter Bedingungen der nichtkatalytischen Partialoxidation (POX);
(d) Ausleiten des Wasserstoff und Kohlenoxide enthaltenden Produktstroms über den Auslass.

Ein sechzehnter Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom durch autothermes Reformieren, umfassend folgende Schritte:
(a) Bereitstellen eines Oxidationsreaktors nach Anspruch 10;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammerund/oder in der Katalysatorschüttung unter Bedingungen des autothermen Reformierens (ATR);
(d) Ausleiten des Wasserstoff und Kohlenoxide enthaltenden Produktstroms über den Auslass.

Ein siebzehnter Aspekt der Erfindung betrifft ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom durch nichtkatalytische Partialoxidation, umfassend folgende Schritte:
(a) Bereitstellen eines Oxidationsreaktors nach Anspruch 1 bis 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammerunter Bedingungen der nichtkatalytischen Partialoxidation von Ammoniak;
(d) Ausleiten des Wasserstoff und Stickstoff enthaltenden Produktstroms über den Auslass.

Ein achtzehnter Aspekt der Erfindung betrifft ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom durch autothermes Reformieren, umfassend folgende Schritte:
(a) Bereitstellen eines Oxidationsreaktors nach Anspruch 10;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammerund/oder in der Katalysatorschüttung unter Bedingungen des autothermen Reformierens (ATR);
(d) Ausleiten des Wasserstoff und Stickstoff enthaltenden Produktstroms über den Auslass.

### Ausführungsbeispiele

Weiterbildungen, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: eine schematische Darstellung einer ersten Ausgestaltung des Oxidationsreaktors als POX-Reaktor gemäß Stand der Technik;
- Fig. 2: eine schematische Darstellung einer zweiten Ausgestaltung des Oxidationsreaktors als ATR gemäß Stand der Technik;
- Fig. 3: eine schematische Darstellung einer dritten Ausgestaltung des Oxidationsreaktors als POX-Reaktor gemäß der Erfindung;
- Fig. 4: eine schematische Darstellung einer vierten Ausgestaltung des Oxidationsreaktors als ATR gemäß der Erfindung.

Im Folgenden ist die Angabe "nicht gezeigt" so zu verstehen, dass ein Element in der besprochenen Abbildung nicht grafisch dargestellt, aber gleichwohl vorhanden ist.

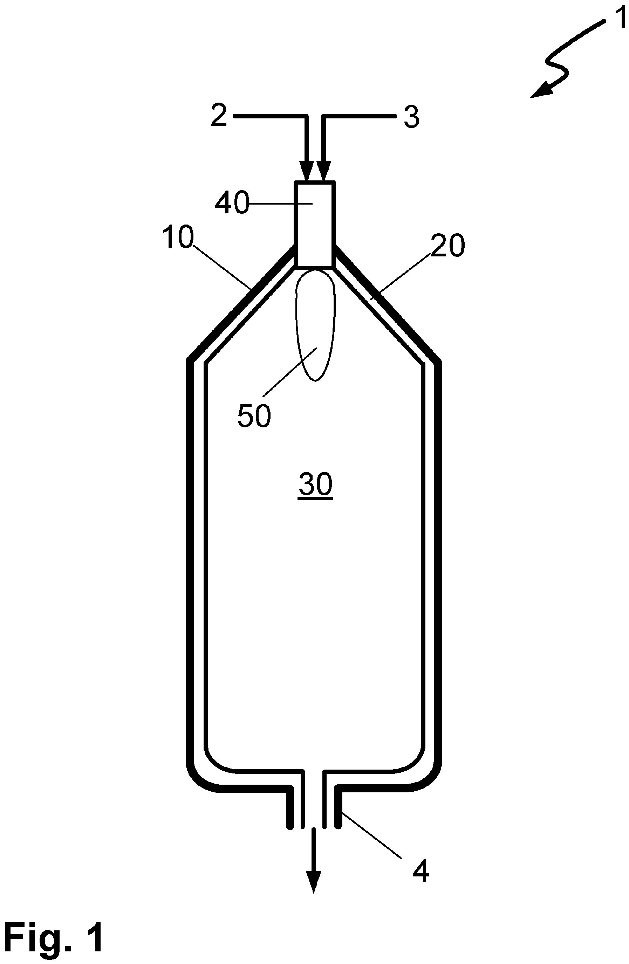

Fig. 1 zeigt eine schematische Darstellung einer ersten Ausgestaltung des Oxidationsreaktors 1 zur Partialoxidation eines Einsatzstroms mit einem Sauerstoff enthaltenden Oxidationsmittelstrom zu einem Wasserstoff enthaltenden Produktstrom als POX-Reaktor gemäß Stand der Technik. Der Oxidationsreaktor umfasst in seinem oberen Teil einen kegelstumpfförmigen Reaktormantel 10, der in seinem weiteren Verlauf in einen zylindrischen Abschnitt übergeht.

An einem Einlassende des Reaktormantels 10 ist ein Einlass für den Einsatzstrom angebracht, wobei der Einlass als Brenner 40 ausgestaltet ist, durch den ein Einsatzstrom über eine Leitung 2 und ein Sauerstoff enthaltender Oxidationsmittelstrom über eine Leitung 3 in ein im Reaktorinneren des Oxidationsreaktors 1 angeordnetes Leervolumen 30 eingeleitet, das als Reaktorkammer dient. Hierbei wird eine Brennerflamme 50 gebildet. Optional kann ein Moderatorstrom, umfassend Dampf und/oder Kohlendioxid, über Leitung 2 oder Leitung 3 oder eine separate, nicht gezeigte Leitung oder eine Kombination mindestens zweier dieser Leitungen in den Oxidationsreaktor eingeleitet werden. In der Reaktorkammer erfolgt die Umsetzung des Einsatzstroms mit dem Sauerstoff enthaltenden Oxidationsmittelstrom unter Bedingungen der nichtkatalytischen Partialoxidation (POX). Der hierbei gebildete Produktstrom wird über einen Auslass 4, der an einem Auslassende des Reaktormantels 10 angebracht ist, aus dem Oxidationsreaktor 1 ausgeleitet. Alle beschriebenen Bestandteile des Oxidationsreaktors 1 sind gasdicht miteinander verbunden und stehen in Fluidverbindung.

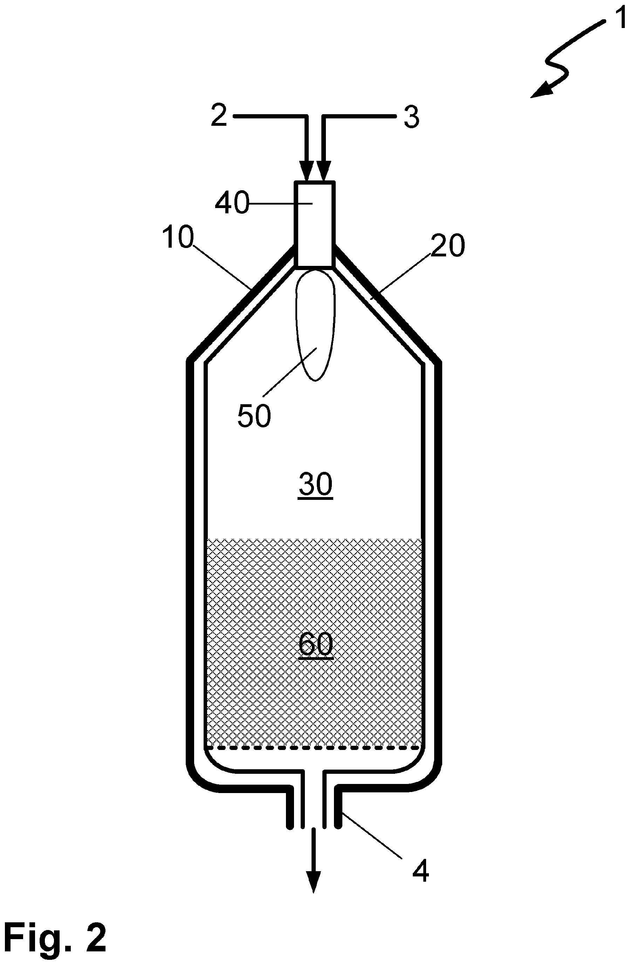

Fig. 2 zeigt eine schematische Darstellung einer zweiten Ausgestaltung des Oxidationsreaktors gemäß des Stands der Technik als Autothermreformer. Bezugszeichen gleicher Nummern bezeichnen Elemente der in den Figuren gezeigten Oxidationsreaktoren mit gleicher Funktion und Struktur, sofern nicht im Einzelzusammenhang anders vermerkt. Grundsätzlich entsprechen die in Fig. 2, 3, 4 gezeigten Ausgestaltungen derjenigen, die im Zusammenhang mit Fig. 1 erläutert wurde; auf Unterschiede wird separat hingewiesen.

Die in Fig. 2 gezeigte Ausgestaltung des Oxidationsreaktors 1 als ATR entspricht weitgehend der in Fig. 1 gezeigten Ausgestaltung, jedoch ist nunmehr eine Schüttung 60 eines ATR-Katalysators im unteren Teil der Reaktorkammer 30 angeordnet. Für den Betrieb des Oxidationsreaktors als Autothermreformer wird neben dem sauerstoffhaltigen Oxidationsmittel über Leitung 2 oder Leitung 3 oder eine separate, nicht gezeigte Leitung oder eine Kombination mindestens zweier dieser Leitungen Dampf in den Oxidationsreaktor eingeleitet.

Die jeweiligen Vor- und Nachteile der in Fig. 1 und Fig. 2 gezeigten Reaktoren laut Stand der Technik wurden bereits oben erläutert.

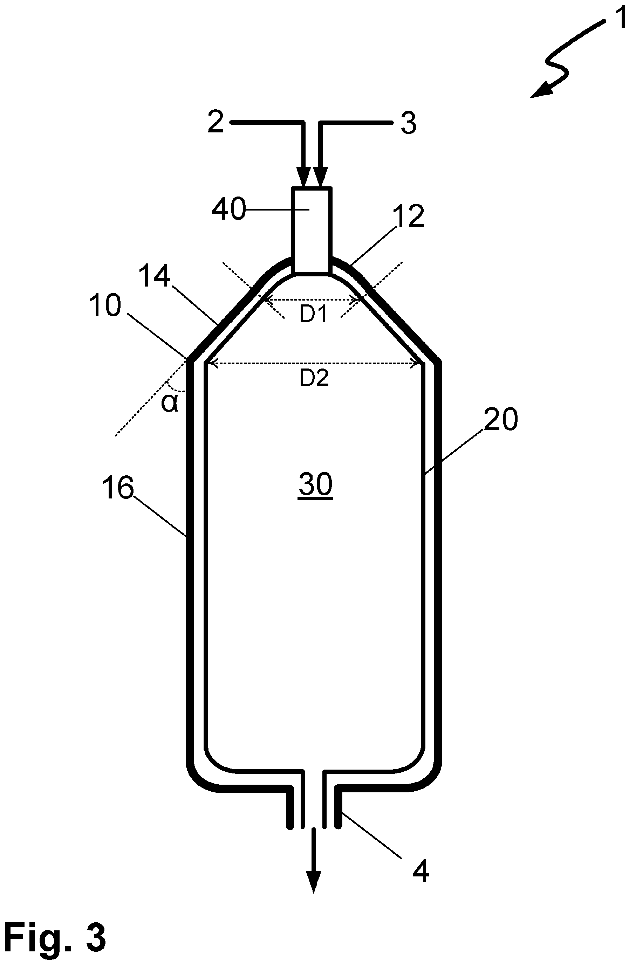

Fig. 3 zeigt eine schematische Darstellung einer dritten Ausgestaltung des Oxidationsreaktors als POX-Reaktor gemäß der Erfindung. Der drucktragende Reaktormantel 10 besteht aus einem metallischen Werkstoff und umfasst entlang der Längsachse folgende Abschnitte:
(a1) einen kuppelförmigen, bevorzugt die Oberfläche eines Kugelsegments aufweisenden ersten Abschnitt 12,
(a2) einen kegelstumpfförmigen zweiten Abschnitt 14, der an seinem schmalen Ende einen Innendurchmesser D1 und an seinem weiten Ende einen Innendurchmesser D2 aufweist,
(a3) einen zylindrischen dritten Abschnitt 16,
wobei der Abschnitt (a1) gasdicht mit dem Abschnitt (a2) gasdicht verbunden ist und der Abschnitt (a2) gasdicht mit dem Abschnitt (a3) gasdicht verbunden ist.

Im Inneren des Reaktormantels 10 ist eine Schutzschicht 20 aus einem feuerfesten und korrosionsbeständigen Material angebracht. Im Inneren der Schutzschicht ist ein Leervolumen 30 angeordnet, das als Reaktorkammer dient.

Am Pol des ersten Abschnitts (a1) ist ein Einlass für den Einsatzstrom angebracht, wobei der Einlass als Brenner 40 ausgestaltet ist, durch den der Einsatzstrom über eine Leitung 2 und der Sauerstoff enthaltende Oxidationsmittelstrom über eine Leitung 3 in die Reaktorkammer eingeleitet werden. Die Brennerflamme ist aus Gründen der Übersichtlichkeit in der Figur nicht gezeigt. Optional kann ein Moderatorstrom, umfassend Dampf und/oder Kohlendioxid, über Leitung 2 oder Leitung 3 oder eine separate, nicht gezeigte Leitung oder eine Kombination mindestens zweier dieser Leitungen in den Oxidationsreaktor eingeleitet werden. In der Reaktorkammer erfolgt die Umsetzung des Einsatzstroms mit dem Sauerstoff enthaltenden Oxidationsmittelstrom unter Bedingungen der nichtkatalytischen Partialoxidation (POX). Der hierbei gebildete Produktstrom wird über einen Auslass 4, der an einem Auslassende des Reaktormantels 10 angebracht ist, aus dem Oxidationsreaktor 1 ausgeleitet. Alle beschriebenen Bestandteile des Oxidationsreaktors 1 sind gasdicht miteinander verbunden und stehen in Fluidverbindung.

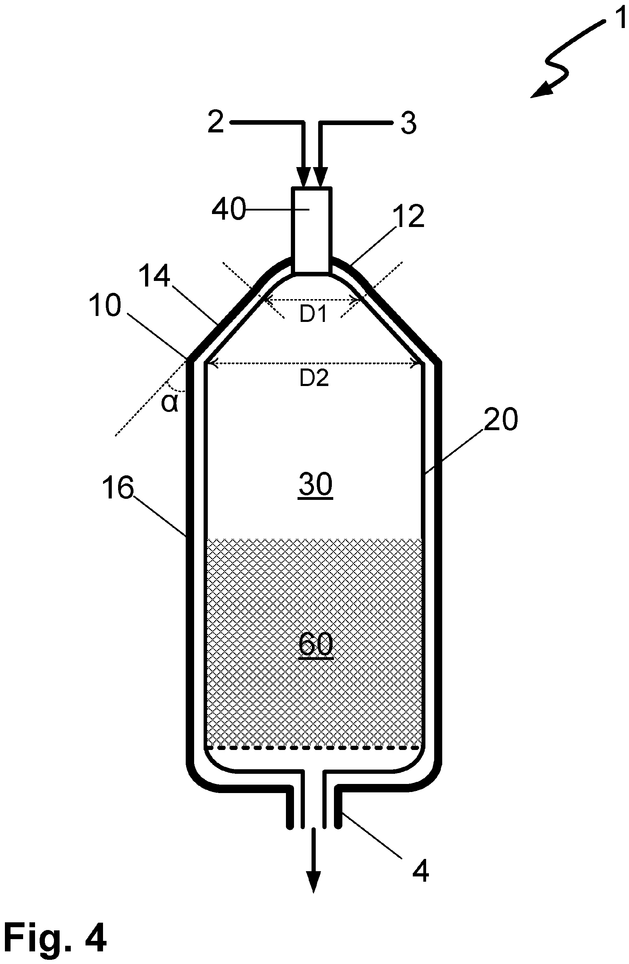

Fig. 4 zeigt eine schematische Darstellung einer dritten Ausgestaltung des Oxidationsreaktors gemäß der Erfindung (Autothermreformer). Die in Fig. 4 gezeigte Ausgestaltung des Oxidationsreaktors 1 als ATR entspricht weitgehend der in Fig. 3 gezeigten Ausgestaltung, jedoch ist nunmehr eine Schüttung 60 eines ATR-Katalysators im unteren Teil der Reaktorkammer 30 angeordnet. Für den Betrieb des Oxidationsreaktors als Autothermreformer wird neben dem sauerstoffhaltigen Oxidationsmittel über Leitung 2 oder Leitung 3 oder eine separate, nicht gezeigte Leitung oder eine Kombination mindestens zweier dieser Leitungen Dampf in den Oxidationsreaktor eingeleitet.

In weiteren Beispielen ist bei den in Fig. 3, 4 gezeigten Oxidationsreaktoren der erste Abschnitt (a1) halbkugelförmig ausgestaltet (nicht gezeigt). Eine solche Geometrie übt die geringsten Lasten und Kräfte auf die innen angeordnete feuerfeste Auskleidung aus.

In weiteren Beispielen weist bei den in Fig. 3, 4 gezeigten Oxidationsreaktoren der kegelstumpfförmige zweite Abschnitt (a2) einen Steigungswinkel zwischen und umfassend 5 und 30°, bevorzugt zwischen und umfassend 10 und 20° gegenüber der Längsachse auf, wobei die genannten Endwerte in die Wertebereiche einbezogen sind (nicht gezeigt). Untersuchungen zeigen, dass durch diese Steigungswinkel des Kegelstumpfs das Volumen des Reaktors vergrößert und gleichzeitig die Kräfte und Belastungen auf die feuerfeste Schutzschicht minimiert werden können.

In weiteren Beispielen weist bei den in Fig. 3, 4 gezeigten Oxidationsreaktoren der kegelstumpfförmige zweite Abschnitt (a2) an seinem schmalen Ende einen Innendurchmesser D1 und an seinem weiten Ende einen Innendurchmesser D2 auf, wobei das Verhältnis D1/D2 zwischen 0,7 und 0,9, bevorzugt zwischen 0,75 und 0,85 liegt (nicht gezeigt). Untersuchungen zeigen, dass diese Längenverhältnisse besondere Vorteile bieten.

In weiteren Beispielen entspricht bei den in Fig. 3, 4 gezeigten Oxidationsreaktoren an einer Übergangsstelle der Abschnitte (a1) und (a2) die Steigung des kuppelförmigen ersten Abschnitts der Steigung des kegelstumpfförmigen zweiten Abschnitts (nicht gezeigt). Auf diese Weise werden Kanten beim Reaktormantel und der innen angebrachten, feuerfesten Schutzschicht vermieden, was die mechanische Stabilität des Apparats vergrößert und die thermische Beanspruchung an der Verbindungsstelle der Abschnitte (a1) und (a2) minimiert.

In weiteren Beispielen ist bei den in Fig. 3, 4 gezeigten Oxidationsreaktoren der Reaktormantel von mindestens einer Kühlzone umgeben, mittels der mindestens ein Abschnitt des Reaktormantels mittels eines fluiden Kühlmediums kühlbar ist (nicht gezeigt). Hierdurch verbessert sich die Temperaturkontrolle des Oxidationsreaktors und die verwendeten Konstruktionsmaterialien und Bauteile des Oxidationsreaktors werden weniger thermisch belastet.

In weiteren Beispielen sind bei den in Fig. 3, 4 gezeigten Oxidationsreaktoren mindestens zwei Kühlzonen vorhanden, die entlang der Längsachse des Oxidationsreaktors angeordnet sind (nicht gezeigt). Hierdurch kann der Oxidationsreaktor weiterbetrieben werden, wenn beispielsweise nur eine Revision oder Reparatur an einer bestimmten Stelle des Reaktormantels erforderlich ist. Es wird dabei nur diejenige Kühlzone außer Betrieb genommen, die die betroffene Stelle des Reaktormantels umgibt, und sodann demontiert. Nach erfolgter Revision oder Reparatur wird diese Kühlzone remontiert und wieder in Betrieb gesetzt. Während der gesamten Zeitdauer der Revisions- bzw. Reparaturmaßnahmen kann der Oxidationsreaktor weiter betrieben werden, so dass Produktionsstillstände vermieden werden.

In weiteren Beispielen wird bei den in Fig. 3, 4 gezeigten Oxidationsreaktoren ein gemeinsames Kühlmedium verwendet, das alle Kühlzonen durchströmt (nicht gezeigt), wobei vorzugsweise Wasser als gemeinsames Kühlmedium verwendet wird. Wasser ist an den meisten Standorten in ausreichender Menge und Qualität verfügbar, ist ungiftig und weist Vorteile auf, wenn eine Kühlung in der entsprechenden Kühlzone als Siedekühlung realisiert werden soll. Die Verwendung eines gemeinsamen Kühlmediums vereinfacht zudem die Gestaltung des Kühlmittelkreislaufs.

In weiteren Beispielen sind bei den in Fig. 3, 4 gezeigten Oxidationsreaktoren die mindestens zwei Kühlzonen separat betreibbar und separat montierbar und demontierbar. Hierdurch kann der Oxidationsreaktor in einem Beispiel weiterbetrieben werden, wenn beispielsweise nur eine Revision oder Reparatur an einer bestimmten Stelle des Reaktormantels erforderlich ist. Während der Zeitdauer der Revisions- bzw. Reparaturmaßnahmen kann der Oxidationsreaktor weiter betrieben werden, so dass Produktionsstillstände vermieden werden.

In weiteren Beispielen wird der in Fig. 3 gezeigte Oxidationsreaktor für die nichtkatalytische Partialoxidation (POX) eines Kohlenwasserstoffe enthaltenden Einsatzstroms zu einem Wasserstoff und Kohlenoxide enthaltenden Produktstrom verwendet.

In weiteren Beispielen wird der in Fig. 3 gezeigte Oxidationsreaktor für die für die Partialoxidation eines Ammoniak enthaltenden Einsatzstroms zu einem Wasserstoff und Stickstoff enthaltenden Produktstrom verwendet.

In einem weiteren Beispiel wird der in Fig. 4 gezeigte Oxidationsreaktor für das autotherme Reformieren (ATR) eines Kohlenwasserstoffe enthaltenden Einsatzstroms zu einem Wasserstoff und Kohlenoxide enthaltenden Produktstrom verwendet.

In einem weiteren Beispiel wird der in Fig. 4 gezeigte Oxidationsreaktor für das autotherme Reformieren (ATR) eines Ammoniak enthaltenden Einsatzstroms zu einem Wasserstoff und Stickstoff enthaltenden Produktstrom verwendet.

Weitere Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammerunter Bedingungen der nichtkatalytischen Partialoxidation (POX);
(d) Ausleiten des Wasserstoff und Kohlenoxide enthaltenden Produktstroms über den Auslass.

Weitere Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Kohlenoxide enthaltenden Produktstroms über den Auslass.

Weitere Ausführungsbeispiele der Erfindung umfassen ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer, optional Einleiten eines Dampfstroms in die Reaktionskammer;
(c) Umsetzen des Ammoniak enthaltenden Einsatzstroms und des Sauerstoff enthaltenden Oxidationsmittelstroms im Brenner und/oder in der Reaktorkammerunter Bedingungen der nichtkatalytischen Partialoxidation von Ammoniak;
(d) Ausleiten des Wasserstoff und Stickstoff enthaltenden Produktstroms über den Auslass.

Weitere Ausführungsbeispiele der Erfindung umfassen ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Stickstoff enthaltenden Produktstroms über den Auslass.

Änderungen an den im Vorstehenden beschriebenen Ausführungsformen oder Ausgestaltungen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

### Bezugszeichenliste

- [1]: Oxidationsreaktor
- [2]: Leitung
- [3]: Leitung
- [4]: Auslass
- [10]: Reaktormantel, zylindrischer dritter Abschnitt
- [12]: Reaktormantel, kuppelförmiger erster Abschnitt
- [14]: Reaktormantel, kegelstumpfförmiger zweiter Abschnitt
- [16]: Reaktormantel, zylindrischer dritter Abschnitt
- [20]: Schutzschicht (feuerfeste Ausmauerung)
- [30]: Leervolumen (Reaktorkammer)
- [40]: Brenner
- [50]: Brennerflamme
- [60]: ATR-Katalysatorschüttung

## Patentansprüche

1. Oxidationsreaktor zur Partialoxidation eines Einsatzstroms mit einem Sauerstoff enthaltenden Oxidationsmittelstrom zu einem Wasserstoff enthaltenden Produktstrom, umfassend:
(a) einen aus einem metallischen Werkstoff bestehenden, eine Längsachse aufweisenden, drucktragenden Reaktormantel, wobei der Reaktormantel entlang der Längsachse folgende Abschnitte umfasst:
(a1) einen kuppelförmigen, bevorzugt die Oberfläche eines Kugelsegments aufweisenden ersten Abschnitt,
(a2) einen kegel(stumpf)förmigen zweiten Abschnitt,
(a3) einen zylindrischen dritten Abschnitt,
wobei der Abschnitt (a1) gasdicht mit dem Abschnitt (a2) gasdicht verbunden ist und der Abschnitt (a2) gasdicht mit dem Abschnitt (a3) gasdicht verbunden ist;
(b) mindestens eine im Inneren des Reaktormantels angebrachte Schutzschicht aus einem feuerfesten und korrosionsbeständigen Material;
(c) ein im Inneren der Schutzschicht angeordnetes Leervolumen als Reaktionskammer;
(d) einen an dem Pol des ersten Abschnitts (a1) angebrachten Einlass für den Einsatzstrom, wobei der Einlass als Brenner ausgestaltet ist, durch den der Einsatzstrom, der Sauerstoff enthaltende Oxidationsmittelstrom und ein optionaler Moderatorstrom in die Reaktorkammereinleitbar sind;
(e) einen an einem Auslassende des Reaktormantels angebrachten Auslass, durch den der Produktstrom ausleitbar ist.

2. Oxidationsreaktor nach Anspruch 1, **dadurch gekennzeichnet, dass** der erste Abschnitt (a1) halbkugelförmig ausgestaltet ist.

3. Oxidationsreaktor nach Anspruch 1 oder 2, **dadurch gekennzeichnet, dass** der kegelstumpfförmige zweiten Abschnitt (a2) einen Steigungswinkel zwischen und umfassend 5 und 30°, bevorzugt zwischen und umfassend 10 und 20° gegenüber der Längsachse aufweist.

4. Oxidationsreaktor nach einem der vorigen Ansprüche, **dadurch gekennzeichnet, dass** der kegelstumpfförmige zweiten Abschnitt (a2) an seinem schmalen Ende einen Innendurchmesser D1 und an seinem weiten Ende einen Innendurchmesser D2 aufweist, wobei das Verhältnis D1/D2 zwischen 0,7 und 0,9, bevorzugt zwischen 0,75 und 0,85 liegt.

5. Oxidationsreaktor nach einem der vorigen Ansprüche, **dadurch gekennzeichnet, dass** an einer Übergangsstelle der Abschnitte (a1) und (a2) die Steigung des kuppelförmigen ersten Abschnitts der Steigung des kegelstumpfförmigen zweiten Abschnitts entspricht.

6. Oxidationsreaktor nach einem der vorigen Ansprüche, **dadurch gekennzeichnet, dass** der Reaktormantel von mindestens einer Kühlzone umgeben ist, mittels der mindestens ein Abschnitt des Reaktormantels mittels eines fluiden Kühlmediums kühlbar ist.

7. Oxidationsreaktor nach einem der vorigen Ansprüche, **dadurch gekennzeichnet, dass** mindestens zwei Kühlzonen vorhanden sind, die entlang der Längsachse des Oxidationsreaktors angeordnet sind.

8. Oxidationsreaktor nach Anspruch 7, **dadurch gekennzeichnet, dass** die mindestens zwei Kühlzonen von einem gemeinsamen Kühlmedium durchströmt werden, wobei vorzugsweise Wasser als gemeinsames Kühlmedium verwendet wird.

9. Oxidationsreaktor nach Anspruch 7, **dadurch gekennzeichnet, dass** die mindestens zwei Kühlzonen separat betreibbar und separat montierbar und demontierbar sind.

10. Oxidationsreaktor nach einem der vorigen Ansprüche, **dadurch gekennzeichnet, dass** ein Teil der Reaktorkammermit einer Schüttung eines festen, partikelförmigen, für das autotherme Reformieren (ATR) aktiven Katalysators gefüllt ist.

11. Verwendung eines Oxidationsreaktors nach Anspruch 1 bis 9 für die nichtkatalytische Partialoxidation (POX) eines Kohlenwasserstoffe enthaltenden Einsatzstroms zu einem Wasserstoff und Kohlenoxide enthaltenden Produktstrom.

12. Verwendung eines Oxidationsreaktors nach Anspruch 10 für das autotherme Reformieren (ATR) eines Kohlenwasserstoffe enthaltenden Einsatzstroms zu einem Wasserstoff und Kohlenoxide enthaltenden Produktstrom.

13. Verwendung eines Oxidationsreaktors nach Anspruch 1 bis 9 für die Partialoxidation eines Ammoniak enthaltenden Einsatzstroms zu einem Wasserstoff und Stickstoff enthaltenden Produktstrom.

14. Verwendung eines Oxidationsreaktors nach Anspruch 10 für das autotherme Reformieren (ATR) eines Ammoniak enthaltenden Einsatzstroms zu einem Wasserstoff und Kohlenoxide enthaltenden Produktstrom.

15. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammerunter Bedingungen der nichtkatalytischen Partialoxidation (POX);
(d) Ausleiten des Wasserstoff und Kohlenoxide enthaltenden Produktstroms über den Auslass.

16. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Kohlenoxide enthaltenden Produktstroms über den Auslass.

17. Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammerunter Bedingungen der nichtkatalytischen Partialoxidation von Ammoniak;
(d) Ausleiten des Wasserstoff und Stickstoff enthaltenden Produktstroms über den Auslass.

18. Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Stickstoff enthaltenden Produktstroms über den Auslass.
